# EUROPÄISCHE PATENTANMELDUNG

(11) **EP 4 461 523 A1**
(43) Veröffentlichungstag der Anmeldung: **13.11.2024**
(21) Anmeldenummer: 24172256.0
(22) Anmeldetag: 24.04.2024
(51) Int. Cl.: B32B 1/08, B32B 5/02, B32B 7/12, B32B 25/10, B32B 25/14, F16L 11/08, B33Y 80/00

(54) **FLEXIBLE FLUIDLEITUNG MIT MEHRSCHICHTIGER WANDUNG UND LEITUNGSANORDNUNG MIT EINER DERARTIGEN FLEXIBLEN FLUIDLEITUNG**

(30) Priorität: 08.05.2023 DE 102023111881
(71) Anmelder: Voss Automotive GmbH, 51688 Wipperfürth (DE)
(72) Erfinder: Schmidt, Lars, 58566 Kierspe (DE)
(74) Vertreter: Dr. Solf & Zapf Patent- und Rechtsanwalts PartG mbB

(57) **Zusammenfassung**

Die Erfindung betrifft eine flexible Fluidleitung (1) mit mehrschichtiger Wandung (W), insbesondere zur Verwendung in der Automobilindustrie, wobei die Wandung (W) eine radial innen liegende Schicht (2), umfassend ein erstes thermoplastisches Elastomer-Vulkanisat, eine radial außen liegende Schicht (3), umfassend ein zweites vernetztes thermoplastischen Elastomer-Vulkanisat sowie eine Verstärkungsschicht (4) umfasst, die zwischen der radial innen liegenden Schicht (2) und der radial außen liegenden Schicht (3) angeordnet ist. Um eine derartige mit verringertem technologischen Aufwand herstellbare, flexible Fluidleitung (1) zur Verfügung zu stellen, mit der verschiedene, insbesondere mit einem Kriechen der thermoplastischen Elastomer-Vulkanisate verbundene Nachteile vermieden werden können, wird vorgeschlagen, dass die Verstärkungsschicht (4) zwischen einer an sie radial innenseitig angrenzenden ersten Haftvermittlerschicht (5) und einer an sie radial außenseitig angrenzenden zweiten Haftvermittlerschicht (6) eingebettet ist.

## Beschreibung

Die Erfindung betrifft eine flexible Fluidleitung mit mehrschichtiger Wandung, insbesondere zur Verwendung in der Automobilindustrie, wobei die Wandung umfasst:
- eine radial innen liegende Schicht, welche einen Leitungsinnenraum der Fluidleitung zum Leiten des Fluids begrenzt, umfassend ein erstes thermoplastisches Elastomer-Vulkanisat,
- eine radial außen liegende Schicht, welche die Fluidleitung gegenüber ihrer Umgebung abschließt, umfassend ein zweites thermoplastisches Elastomer-Vulkanisat,
- sowie eine Verstärkungsschicht, die zwischen der radial innen liegenden und der radial außen liegenden Schicht angeordnet ist.

Der Ausdruck "flexible Fluidleitung" wird dabei anmeldungsgemäß auch als Synonym für "Schlauch" gebraucht.

Des Weiteren betrifft die Erfindung eine Leitungsanordnung mit einer derartigen flexiblen Fluidleitung.

Flexible Fluidleitungen der genannten Art dienen beispielsweise dazu, Bauteile, insbesondere Fahrzeugbauteile, fluidtechnisch miteinander zu verbinden, wobei solche Fahrzeugbauteile z. B. Scheibenwaschanlagen, elektrische Fahrzeugbatterien eines Elektrofahrzeuges, Motorkühlvorrichtungen zum Kühlen eines Verbrennungsmotors, Wärmetauscher zum Kühlen von elektrischen Steuerungen und/oder Temperiervorrichtungen, beispielsweise für wässrige Harnstofflösungen, sein können.

Was die Verbindung der Fluidleitung mit weiteren Bauteilen betrifft, so wird an sie z. B. die Forderung gestellt, dass die Leitung auf Dorne von Verbinderteilen halternd aufschiebbar sein muss, wofür das Vorhandensein einer Aufweitbarkeit und dann eines bestimmten Rückstellverhaltens der Leitungswandung Voraussetzungen sind. Einerseits muss eine radiale Dehnbarkeit der Leitungswandung vorhanden sein, damit die Leitung bei diesem Aufdornen nicht einreißt oder aufplatzt, andererseits darf die Fluidleitung aber auch, wenn sie aufgedornt ist, bei Zugbeanspruchung nicht zu leicht wieder vom Dorn abreißen

Eine flexible Fluidleitung der eingangs beschriebenen Art ist beispielsweise aus der EP 3 666 516 B1 bekannt. Die bekannte Fluidleitung weist eine Sperrschicht auf, welche einen Leitungsinnenraum der Fluidleitung zum Leiten des Fluids begrenzt und dazu dient, eine Diffusion des Fluids radial nach außen zu unterbinden. Die Sperrschicht umfasst ein peroxidisch vernetztes thermoplastisches Elastomer-Vulkanisat (TPE-V). Die Fluidleitung weist zudem auch eine weitere Leitungsschicht auf, welche radial außerhalb der Sperrschicht angeordnet ist und ein peroxidisch vernetztes, ein schwefelvernetztes oder ein harzvernetztes thermoplastisches Elastomer-Vulkanisat umfasst.

Des Weiteren weist die bekannte Fluidleitung zumindest einen sogenannten Festigkeitsträger auf, welcher insbesondere in der Sperrschicht oder in einer Zwischenschicht zwischen der Sperrschicht und der weiteren Leitungsschicht oder radial außerhalb der weiteren Leitungsschicht angeordnet ist. Die bekannte Fluidleitung kann integral oder zumindest abschnittsweise als ein formstabiler Formschlauch mit zweidimensional oder dreidimensional gekrümmtem Verlauf oder als ein flexibel verformbarer Wellschlauch ausgebildet sein. Bekanntermaßen kann durch eine derartige Wellung der Wandung eine flexible Verformbarkeit hergestellt werden, auch wenn die Wandung ohne Wellung nahezu nicht flexibel sein sollte. In einer vorteilhaften Ausführungsform der EP 3 666 516 B1 beträgt bei einer mehrlagigen Fluidleitung die Dicke der Fluidleitung zwischen 1 mm und 4,5 mm, insbesondere zwischen 1,5 mm und 2 mm, wobei insbesondere die Dicke der Sperrschicht der mehrlagigen Fluidleitung zwischen 0,1 mm und 0,5 mm beträgt, insbesondere 0,2 mm.

Aufgrund der sogenannten CO₂-Footprint-Anforderungen wird in der Automobilindustrie u. a. gefordert, für Gummi- bzw. Kautschukschläuche rezyklierbare Alternativen anzubieten, welche aber keine Qualitätseinbußen gegenüber den herkömmlich eingesetzten Gummi- bzw. Kautschukschläuchen aufweisen dürfen. So soll beispielsweise das vorteilhafte Eigenschaftsprofil eines wegen seiner Vernetzung nicht rezyklierbaren EPDM-Schlauchs bei einem rezyklierbaren Alternativschlauch erhalten bleiben.

Wie beispielsweise die EP 3 666 516 B1 zeigt, soll dem durch den Einsatz von thermoplastischen Elastomer-Vulkanisaten (TPE-V) abgeholfen werden, die auch nach Ablauf ihrer Betriebsdauer wiederaufschmelzbar sind und daher einem Recycling zugeführt werden können. Allerdings können mit den thermoplastischen Elastomer-Vulkanisaten (TPE-V) nachteiligerweise Qualitätseinbußen im Eigenschaftsprofil verbunden sein.

Solche und ähnliche Materialien sind an sich und auch in ihrer Verwendung in flexiblen Rohrleitungen grundsätzlich bekannt. Dabei steht oftmals auch die Abkürzung "TPV" (anstelle von "TPE-V") für elastische, aber thermoplastisch verarbeitbare Werkstoffe, die auf einem vernetzten Blend eines Thermomeranteils - weit verbreitet ist Polypropylen - und eines Elastomeranteils - weit verbreitet ist EPDM - basieren. Sie bilden eine Unterkategorie innerhalb der allgemeinen Gruppe der thermoplastischen Elastomere (TPE), die als solche vernetzt sein können, aber nicht zwingend vernetzt sein müssen.

Wenn ein thermoplastisches Elastomermaterial (TPE) zusätzlich noch einer Vulkanisation unterzogen wird, kommt es zu einer solchen Vernetzung, und es liegt dann ein thermoplastisches Elastomer-Vulkanisat (TPE-V) vor.

Die WO 2021/188528 A1 offenbart ein flexibles - als "spoolable" ("(auf-)spulbar") bezeichnetes - Rohr, umfassend: eine Sperrschicht, die um eine Längsachse des Rohrs herum ausgebildet ist; eine Verstärkungsschicht, die um die Sperrschicht herum angeordnet ist und die ein Fasermaterial umfasst; sowie eine Außenschicht, wobei mindestens eine der beiden Schichten - Verstärkungsschicht oder Außenschicht - eine thermoplastische Elastomer(TPE)-Zusammensetzung umfasst, die eine thermoplastische Matrix und eine in der thermoplastischen Matrix dispergierte Kautschukphase umfasst und eine Wärmeleitfähigkeit von etwa 0,2 W / (m K) oder weniger aufweist. Die Leitungswandung kann fünf Lagen aufweisen. Als TPE-Zusammensetzungen können solche eingesetzt werden, bei denen die elastomere Phase ganz oder teilweise vernetzt ist, bei denen es sich also um ein TPE-V handelt.

Die WO 2020/068408 A1 beschreibt eine flexible Leitung, die in ihrer Wandung ebenfalls fünf Lagen aufweisen kann und zum Transport von Kohlenwasserstofffluiden, insbesondere für Off-Shore- und On-Shore-Öl- und Gasanwendungen, verwendet werden soll. Diese Leitung umfasst eine innere Druckhülle, mindestens eine Verstärkungsschicht, die zumindest teilweise um die Druckhülle herum angeordnet ist und eine äußere Schutzhülle. Optional ist eine thermisch isolierende Schicht vorhanden, die zwischen der Verstärkungsschicht und der äußeren Schutzhülle angeordnet ist. Mindestens eine der Schichten (innere Druckhülle, äußere Schutzhülle, wärmeisolierende Schicht) soll unter Verwendung einer Zusammensetzung aus einem thermoplastischen Blend (TPB) hergestellt werden. Eine Vulkanisation ist dabei nicht vorgesehen.

Ein aus der WO 2020/055709 A1 bekanntes flexibles Rohr ist ebenfalls zum Transport von Fluiden, insbesondere Flüssigkeiten, in der Kohlenwasserstoffproduktion bestimmt. Das flexible Rohr umfasst mindestens eine Schicht, die aus einer thermoplastischen Vulkanisat-Zusammensetzung (TPE-V) besteht. In verschiedenen Ausführungsformen enthält diese Zusammensetzung ein zyklisches Olefin-Copolymer, ein Kohlenwasserstoffharz oder ein Gleitmittel, wobei diese Konstituenten jeweils in einem Bereich von 0,1 Gew.-% bis 30 Gew.-%, bezogen auf das Gesamtgewicht der TPV-Zusammensetzung, vorhanden sein können. In einer anderen Ausführungsform enthält die Zusammensetzung ferner eine Siliciumhydrid-Reduktionsmittelverbindung mit mindestens zwei Si-H-Gruppen oder schließlich in noch einer weiteren Ausführungsform ein Kompatibilisierungsmittel auf Polyolefinbasis. Kompatibilisierungsmittel dienen dazu, mögliche Mischungsunverträglichkeiten zwischen der thermomeren und der elastomeren Phase zu beseitigen.

Thermoplastische Elastomer-Vulkanisate (TPE-V) haben den großen Nachteil, dass sie mehr oder weniger stark ausgeprägte viskoelastische bzw. elastoviskose Eigenschaften aufweisen, was sich darin zeigt, dass sie unter erhöhtem Druck und/oder erhöhter Temperatur zu kriechen beginnen und somit nicht formstabil bleiben. Dieses Kriechverhalten ist vom Mischungsverhältnis von Elastomeranteil zu Thermomeranteil abhängig. Es kommt sehr stark darauf an, wieviel von jeder Komponente jeweils im Material vorliegt. Je höher der Gummi- bzw. Kautschukanteil (Elastomer) ist, desto stärker ausgeprägt ist das Kriechverhalten (engl.: "creep").

Das Kriechverhalten kann sich u. U. ungünstig auf die Dauerhaftigkeit einer Verbindung "flexible TPE-V-Leitung / Dorn" auswirken, so dass diese zusätzlich, beispielsweise mit Schellen, mechanisch gegen Lösen fixiert werden muss. Als anzustrebendes Vergleichsbeispiel wird hier oft eine Verbindung "PA12-Leitung / Dorn" herangezogen, die aufgrund der vergleichsweise geringen Kriechneigung von PA12 als besonders dauerhaft anzusehen ist und keiner zusätzlichen mechanischen Fixierung bedarf. Dies gilt auch für Rohre aus PA6, PA 6.6, PA 6.12, PP oder PA11.

In der WO 2019/125547 A1, die sich ebenfalls auf eine bekannte flexible Leitung mit mehrschichtiger Wandung bezieht, welche u. a. eine wärmeisolierende Schicht mit einer thermoplastischen Vulkanisat-Zusammensetzung umfasst, wird das Kriechverhalten explizit thematisiert. Es wird eine Bestimmungsmethode dafür beschrieben, und es werden die Ergebnisse von Untersuchungen zum Einfluss des Anteils einer Polypropylen-Komponente der Zusammensetzung auf eine nach der beschriebenen Methode bestimmte Kriechzeit wiedergegeben. Mit höherem PP-Gehalt verbesserte sich das Kriechverhalten.

Um dem Kriechen entgegenzuwirken, kann auch - wie ebenfalls in der EP 3 666 516 B1 vorgesehen - ein Festigkeitsträger, z. B. eine Faserverstärkung, in die Leitungswandung eingebracht werden, was allerdings oft durch verbleibende Wechselwirkungen mit den zum Kriechen neigenden thermoplastischen Vulkanisaten nicht zu einer nachhaltig stabilisierenden Wirkung führt. Außerdem muss in einem solchen Fall auch - was die Herstellung betrifft - ein Vorrohr, z. B. die Sperrschicht der aus der EP 3 666 516 B1 bekannten Fluidleitung, auf welche die Verstärkung aufgebracht werden soll, oftmals vor einer finalen Überextrusion der Außenschicht(en) vorgeheizt werden, um einen ausreichenden Zusammenhalt von Vorrohr, Festigkeitsträger und Außenschicht(en) herzustellen.

In der WO 2023/016624 A1 ist ein nicht gattungsgemäßes Rohr zum Transport eines Fluids beschrieben, wobei das Rohr eine Längsachse aufweist und zumindest die folgenden Schichten umfasst: - einen innersten Polymerschlauch zum Transport der Flüssigkeit, - eine den Polymerschlauch umgebende Fluiddiffusionssperrschicht, wobei die Fluiddiffusionssperrschicht mittels einer ersten Klebstoffschicht mit dem Polymerschlauch verbunden ist, - eine Verstärkungsschicht, die die Flüssigkeitsdiffusionsbarriereschicht umgibt, wobei die Verstärkungsschicht vermaschte Fasern umfasst, die eine axiale und radiale Verstärkung für das Rohr bereitstellen, wobei die Verstärkungsschicht mittels einer zweiten Klebstoffschicht mit der Flüssigkeitsdiffusionsbarriereschicht verbunden ist, - eine äußerste Polymerschale, die die Verstärkungsschicht umgibt, wobei die Polymerschale mittels einer dritten Klebstoffschicht mit der Verstärkungsschicht verbunden ist, wobei die dritte Klebstoffschicht und/oder die zweite Klebstoffschicht dazu geeignet sind, an den vermaschten Fasern der Verstärkungsschicht zu haften.

Der Erfindung liegt die Aufgabe zugrunde, eine mit verringertem technologischen Aufwand herstellbare, flexible Fluidleitung mit mehrschichtiger Wandung der eingangs genannten Art zur Verfügung zu stellen, mit der die vorstehend genannten Nachteile vermieden werden können.

Die Aufgabe wird erfindungsgemäß durch die Merkmale des kennzeichnenden Teils des Anspruchs 1 gelöst. Demnach ist vorgesehen, dass die Verstärkungsschicht zwischen einer an sie radial innenseitig angrenzenden ersten Haftvermittlerschicht und einer an sie radial außenseitig angrenzenden zweiten Haftvermittlerschicht eingebettet ist.

Durch das Vorhandensein der ersten Haftvermittlerschicht, bevorzugt als eine Schicht, welche die als Vorrohr dienende, radial innen liegende Schicht umgibt, und durch das Vorhandensein der zweiten Haftvermittlerschicht, welche als Bestandteil einer Rohrummantelung immer radial unter der radial außen liegenden Schicht angeordnet ist, wird die mechanische Stabilität der Verstärkungsschicht noch weitergehend erhöht.

Die Verstärkungsschicht kann dabei insbesondere aus Fasern und/oder Fäden, die vorzugsweise zu einem textilen Flächengebilde verarbeitet sind, gebildet sein.

Eine optimale Einbettung einer derartigen Faserverstärkung in einem Haftvermittler geschieht dabei unter anderem dadurch, dass ein Haftvermittler eingesetzt wird, der bei seiner Schichtauftragung eine ausreichend niedrige Viskosität und Oberflächenspannung aufweist, um Verstärkung, insbesondere die Fasern, gut zu umschließen und zu benetzen, so dass eine starke Haftung zwischen den Materialien erreicht wird. Die Fasern können so stoffschlüssig (adhäsiv) und/oder formschlüssig sowie nahezu ohne Lufteinschlüsse gut fixiert werden, wobei es möglich und auch erwünscht ist, dass die erste Haftvermittlerschicht und die zweite Haftvermittlerschicht die Verstärkungsschicht durchdringen und unter Zwischenlage der Fasern bzw. des aus ihnen gebildeten textilen Flächengebildes fließend ineinander übergehen können. Während sich herkömmliche reine TPE-V-Verbünde (ggf. mit Verstärkungsschicht) ohne große Anstrengung auseinanderziehen lassen, gelingt dies beim erfindungsgemäßen Leitungsaufbau vorteilhafterweise nicht.

Als Materialien der thermoplastischen Elastomer-Vulkanisate (TPE-V) können in der radial innen und in der radial außen liegenden Schicht - wie an sich bekannt - vernetzte Blends aus Polyamid (PA) oder Polyolefin, wie Polypropylen (PP) oder Polyethylen (PE), mit Ethylen-Propylen-Dien-Kautschuk (EPDM), Isobuten-Isopren-Kautschuk (HR), Acrylnitrilbutadien-Kautschuk (NBR), hydriertem Acrylnitrilbutadien-Kautschuk (HNBR) und/oder Ethylen-Vinylacetat-Kautschuk (EVM) eingesetzt werden.

Da hierbei Materialien gewählt werden können, die eine geringere Dichte aufweisen als herkömmlich eingesetzte Kautschuke, wie EPDM, und da aufgrund der Einbettung der Verstärkungsschicht in die Haftvermittlerschichten ohne Qualitätseinbuße eine geringere Gesamtwandstärke der erfindungsgemäßen flexiblen Leitung realisiert werden kann, werden durch die Erfindung vorteilhafterweise erhebliche Gewichtseinsparungen, also ein verbessertes Masse-Leistungs-Verhältnis, ermöglicht.

Durch den erfindungsgemäßen Schichtverbund der Wandung kann in vorteilhafter Weise auch ein eventuelles ungünstig wirkendes Kriechverhalten, das die TPE-V-Materialien an sich aufweisen können, unterbunden werden. Somit kann die erfindungsgemäße flexible Fluidleitung ohne weitere mechanische Fixierung langzeitlich auf ein Dornprofil appliziert werden, und es kann sogar - im Vergleich mit Leitungen ohne Haftvermittlerschichten - ohne weitere Befestigung eine Erhöhung der Abzugskräfte von einem Steckverbinder um bis zu 47 % erreicht werden, da durch die Fixierung der Verstärkungsschicht das Kriechverhalten des TPE-V kompensiert bzw. abgefangen wird. Dies gilt für einen Dorn mit nur zwei hintereinander angeordneten Haltezähnen, bei einem Dorn mit drei Haltezähnen ist der Wert nochmals deutlich höher. Der Vorteil der hohen Abzugskräfte ist, dass je nach Einsatz kurzbauende Dorne mit nur zwei Zähnen verwendet werden können.

Weitere vorteilhafte Wirkungen der Erfindung sind, dass die Berstdrücke einer erfindungsgemäßen flexiblen Leitung, insbesondere bei Temperaturen bis zu 110 °C, deutlich höher sind als bei herkömmlichen Leitungen ohne Haftvermittlerschichten. So reißen wegen des hohen Formschlusses und der Stabilität des Materials um eine Faserverstärkung herum die Fasern der Verstärkungsschicht beim Biegen nicht auf.

Außerdem wird die Längenausdehnung des Rohrs unter Temperatur- und Druckeinwirkung deutlich reduziert, da die Verstärkung longitudinal fixiert ist. Ebenso wird die Volumenzunahme des Rohrs unter Temperatur- und Druckeinwirkung deutlich reduziert, da die Verstärkung radial fixiert ist.

Des Weiteren ist mit Vorteil - was die Herstellung einer erfindungsgemäßen flexiblen Leitung betrifft - vor der Ummantelung kein Vorheizen der als Vorrohr dienenden, radial innen liegenden Schicht mehr zwingend notwendig, da bei der Ummantelung hohe Verarbeitungstemperaturen, wie Temperaturen des Haftvermittlers im Bereich von 230 °C bis 250 °C, angewendet werden können.

Grundsätzlich können dabei zur Herstellung alle in der Fachwelt zur Rohrherstellung bekannten Verfahren zur Anwendung kommen, also Verfahren, bei denen zumindest eine der Schichten, vorzugsweise mehrere Schichten, mittels Extrusion, Coextrusion, Blasformen, Spritzgießen, Thermoformen, Formpressen, 3D-Drucken oder dergleichen oder einer Kombination davon hergestellt ist/sind. Bevorzugt wird ausschließlich ein Extrusionsverfahren eingesetzt.

Zu den positiven synergistischen Wirkungen, die dadurch entstehen, dass die Schichtfolge aus der Verstärkungsschicht und den an sie radial innenseitig und außenseitig und an die radial innere und äußere TPE-V-Schicht angrenzenden ersten und zweiten Haftvermittlerschichten ein Verbundkörper ist, tritt eine Verstärkung der Vorteile ein, welche an sich schon mit dem Einsatz von verstärkten TPE-V-Materialien verbunden sind. So ist - abgesehen von der nach wie vor als TPE-V-Leitung gegebenen Recyclingmöglichkeit - beispielsweise eine Erhöhung der Zugfestigkeit in Längsrichtung um bis zu 30 % gegenüber einem reinen TPE-V Rohr mit Faserverstärkung erreichbar. Auch ist die Formstabilität nach einem Biegeprozess deutlich höher.

Die chemische Zusammensetzung der Haftvermittlerschichten ist selektiv im Hinblick darauf zu wählen, dass sie eine hohe Adhäsion einerseits zur Verstärkungsschicht und andererseits zu der jeweils an sie anderseitig angrenzenden TPE-V-Schicht aufweisen müssen. Dies kann insbesondere dadurch erreicht werden, dass in den Haftvermittlerschichten Copolymere eingesetzt werden, die Monomereinheiten enthalten, die auch im Material der Verstärkungsschicht enthalten oder ihnen chemisch ähnlich sind, und die des Weiteren Monomere enthalten, die auch in der angrenzenden TPE-V-Schicht enthalten oder ihnen chemisch ähnlich sind.

Ein unter diesen Gesichtspunkten bevorzugter Haftvermittler ist beispielsweise ein mit Maleinsäureanhydrid gepfropftes, auf Homo-PP basierendes Copolymer.

Auch können als Haftvermittler grundsätzlich Stoffe eingesetzt werden, die in Kunststoffmaterialien, insbesondere TPE-Materialien, bekanntermaßen zwar nicht als Haftvermittler, aber als Verträglichkeitsmacher oder -vermittler - auch Kompatibilisierungsmittel genannt - zur Herstellung einer erhöhten Adhäsion zwischen unterschiedlichen Polymerphasen, die eine Mischungslücke aufweisen, eingesetzt werden. So wurde beispielsweise in der DE 10 2019 118 856 A1 für ein polypropylenbasierendes thermoplastisches Elastomer, welches eine Polyamid-Phase enthält, als Verträglichkeitsmacher ein solcher auf der Basis eines Copolymers beschrieben, das Ethylen- und Acrylsäure-Monomereinheiten enthält. Insbesondere handelt es sich dabei um ein partiell neutralisiertes lonomer. Eine solche oder ähnliche Zusammensetzung könnte z. B. insbesondere dann eingesetzt werden, wenn die Verstärkungsschicht und/oder die angrenzende TPE-V-Schicht ein Polyamid enthält.

Im Gegensatz zur oben erwähnten WO 2023/016624 A1 sind für die Erfindung auch noch die folgenden Merkmale hervorzuheben. Während bekanntermaßen die Einbettung einer Faserverstärkung mittels Kleber beschrieben wird, wobei für die Schichtstärken und Härtegrade des Klebers - wie im Allgemeinen üblich - keine Werte angegeben werden, handelt es sich erfindungsgemäß um haftungsmodifizierte Polymere, wobei die haftvermittelnden Polymerschichten eigene tragende Schichten mit jeweils definierter Wandstärke und Shorehärte ausbilden. Während bei dem bekannten Rohr, welches im Fernwärmebereich eingesetzt werden soll, die erste Schicht als PEX- oder PE-RT-Rohr (vernetztes Polyethylen oder Polyethylen hoher Temperaturbeständigkeit) - gegebenenfalls auch aus Polybutylen oder Polyketon - beschrieben wird, handelt es sich erfindungsgemäß in der inneren (und auch der äußeren) Schicht insbesondere um ein TPV auf PP (Polypropylen)-Basis, so dass eine flexible Leitung für die Automobilindustrie entsteht. Auch wird gemäß dem genannten Dokument zur unverzichtbar gleichzeitig radialen und axialen Faserverstärkung eine Haftung des Klebers zur Faser angestrebt, was erfindungsgemäß nicht der Fall ist, sondern es steht hier ein hoher, beispielsweise durch niedrigviskose Formmassen erzielbarer Formschluss im Vordergrund. Während die WO 2023/016624 A1 als bevorzugte Ausführungsform ein Gewebe für die Verstärkungsschicht beschreibt, präferiert die Erfindung insbesondere ein Umstricken. PES (Polyester), insbesondere PET (Polyethylenterephthalat), wird im Gegensatz zur Erfindung in der WO 2023/016624 A1 nur als Folienwerkstoff für eine Polymerunterschicht in einem Diffusionsbarriereschicht-Laminat, nicht aber als Faserwerkstoff genannt. Auch erfordert die Erfindung mit Vorteil nicht drei Kleberschichten, wie sie der Gegenstand der WO 2023/016624 A1 unverzichtbar aufweist.

Weitere vorteilhafte Ausgestaltungen der Erfindung ergeben sich aus der folgenden Figurenbeschreibung und aus den abhängigen Ansprüchen.

Es zeigen:
- Fig. 1: einen Querschnitt durch eine Ausführungsform einer erfindungsgemäßen flexiblen Fluidleitung,
- Fig. 2: eine Draufsicht auf die in Fig. 1 dargestellte erfindungsgemäße flexible Fluidleitung,
- Fig. 3: einen Längsschnitt durch eine bekannte Leitungsanordnung mit einem Bauteil und mit einer bekannten Fluidleitung, wobei die bekannte Fluidleitung mit dem Bauteil über einen Dorn fluidtechnisch verbunden ist,
- Fig. 4: in einer Darstellung wie in Fig. 3, einen Längsschnitt durch eine erfindungsgemäße Leitungsanordnung mit einem Bauteil, insbesondere mit einem Fahrzeugbauteil, und mit einer erfindungsgemäßen flexiblen Fluidleitung, wobei die erfindungsgemäße flexible Fluidleitung mit dem Bauteil über einen Dorn fluidtechnisch verbunden ist,
- Fig. 5: in tabellarisch zusammengestellter Form, eine Übersicht über typische mechanische und thermische Eigenschaften eines im Rahmen der Erfindung bevorzugt einsetzbaren Haftvermittlers, einschließlich der einschlägigen Normen zur Bestimmung dieser Eigenschaften,
- Fig. 6: eine Diagrammdarstellung der dynamischen Viskosität η eines im Rahmen der Erfindung bevorzugt einsetzbaren Haftvermittlers in Abhängigkeit von der Schergeschwindigkeit 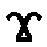 bei verschiedenen Verarbeitungstemperaturen.

In den verschiedenen Figuren der Zeichnung sind gleiche Teile stets mit denselben Bezugszeichen versehen und werden daher in der Regel nachfolgend nur einmal beschrieben.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal der Ausführungsbeispiele auch losgelöst von allen anderen im Zusammenhang damit beschriebenen Teilmerkmalen für sich von Bedeutung für den Gegenstand der Erfindung.

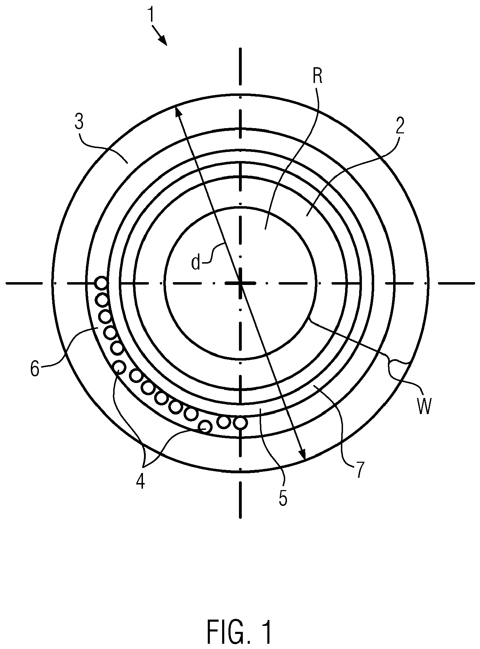

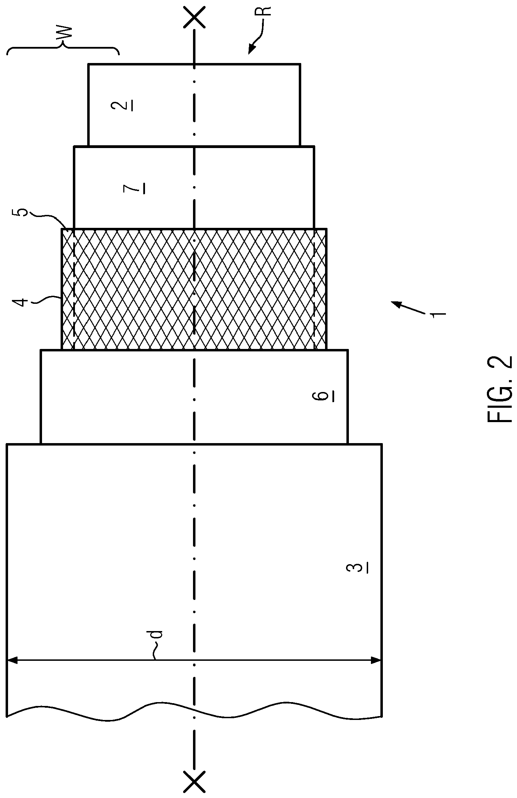

Wie zunächst Fig. 1 und auch Fig. 2 zeigen, hat eine erfindungsgemäße flexible Fluidleitung 1, die insbesondere in der Automobilindustrie zur Verwendung kommen kann, eine mehrschichtige Wandung W.

Die mehrschichtige Wandung W ist flexibel und weist erfindungsgemäß folgenden Schichtaufbau auf:
- eine radial innen liegende Schicht 2, welche einen Leitungsinnenraum R der Fluidleitung 1 zum Leiten des Fluids begrenzt, wobei diese radial innen liegende Schicht 2 ein erstes thermoplastisches Elastomer-Vulkanisat umfasst,
- eine radial außen liegende Schicht 3, welche die Fluidleitung 1 gegenüber ihrer Umgebung abschließt, wobei diese radial außen liegende Schicht 3 ein zweites thermoplastisches Elastomer-Vulkanisat umfasst, und
- eine Verstärkungsschicht 4, die zwischen der radial innen liegenden Schicht 2 und der radial außen liegenden Schicht 3 angeordnet ist,
- wobei die Verstärkungsschicht 4 zwischen einer an sie radial innenseitig angrenzenden ersten Haftvermittlerschicht 5 und einer an sie radial außenseitig angrenzenden zweiten Haftvermittlerschicht 6 eingebettet ist.

Die Verstärkungsschicht 4 kann aus Fasern, insbesondere mit einer Feinheit im Bereich von 500 bis 2000 dtex, und/oder aus Fäden gebildet sein, wobei die Fasern oder die Fäden vorzugsweise zu einem textilen Flächengebilde verarbeitet sind.

Die radial innenseitig an die Verstärkungsschicht 4 angrenzende erste Haftvermittlerschicht 5 und/oder die radial außenseitig an die Verstärkungsschicht 4 angrenzende zweite Haftvermittlerschicht 6 können jeweils eine Dicke im Bereich von 0,05 mm bis 1,5 mm, vorzugsweise im Bereich von 0,1 mm und 0,3 mm, aufweisen.

Optional ist - wie der Zeichnung zu entnehmen ist - zwischen der radial innen liegenden Schicht 2, welche den Leitungsinnenraum R der Fluidleitung 1 begrenzt, und der ersten Haftvermittlerschicht 5, welche innenseitig an die Verstärkungsschicht 4 angrenzt, eine weitere Innenschicht 7 angeordnet, welche insbesondere ein drittes thermoplastisches Elastomer-Vulkanisat umfasst oder vollständig daraus besteht.

Zur Herstellung der Elastomer-Vulkanisat-Schichten können - wie bereits erwähnt - vorzugsweise Extrusion, Coextrusion, Blasformen, Spritzgießen, Thermoformen, Formpressen, 3D-Drucken oder dergleichen oder eine Kombination davon eingesetzt werden.

Unter,,... ein erstes, zweites, drittes thermoplastisches Elastomer-Vulkanisat umfasst" wird dabei verstanden, dass die jeweilige Schicht 2, 3, 7 vollständig oder zumindest teilweise aus einem thermoplastischen Elastomer-Vulkanisat besteht, wobei das erste, zweite und dritte thermoplastische Elastomer-Vulkanisat nicht zwangsläufig verschieden voneinander sein müssen. Das TPE-V Material der jeweiligen Schicht 2, 3, 7 ist vorteilhafterweise entsprechend der zu erwartenden Anforderungen individuell wählbar, so dass für verschiedene Endanwendungen benötigte Eigenschaften der erfindungsgemäßen flexiblen Leitung flexibel eingestellt werden können.

So kann zum Beispiel für die radial innen liegenden Schicht 2 zur besseren Abdichtung auf einer radial dichtenden Fläche ein weiches TPE-V mit einer Shore-A-Härte im Bereich von 60 bis 90, vorzugsweise von 70 bis 80, als Material gewählt werden.

Im Bereich von 30 bis 95 der Shore-A-Härte korreliert bekanntermaßen das Elastizitätsmodul von Elastomeren bei statischer Druckbeanspruchung (bzw. der Realteil des Elastizitätsmoduls bei dynamischer Messung) positiv progressiv mit der Shore-Härte (Theorie von Boussinesq), so dass die Shore-A-Härte auch zu einer überschlägigen Abschätzung des Elastizitätsmoduls herangezogen werden kann.

Die Montagekraft beim Aufdornen kann durch ein weiches TPE-V mit einer Shore-A-Härte im Bereich von 60 bis 90 in der radial innen liegenden Schicht 2 positiv beeinflusst, d. h. gesenkt, werden.

Durch ein hartes TPE-V-Material mit einer Härte im Bereich Shore > 90A bis 50D in der radial innen liegenden Schicht 2 können allerdings höhere Haltekräfte auf einem Dorn D erzielt werden. Auch bewirkt ein solches hartes Material in der radial innen liegenden Schicht 2 bei einem Biegeprozess eine Reduktion der möglichen Ausbildung einer ovalen Querschnittsform des Innenraums R. Des Weiteren kann durch ein hartes TPE-V-Material auch die Zugfestigkeit der erfindungsgemäßen flexiblen Leitung 1 in Längsrichtung X-X erhöht werden.

Insbesondere mit Bezug auf das Dichtverhalten einer erfindungsgemäßen flexiblen Leitung 1 aber auch beispielweise mit Bezug auf die Haltekraft auf einem Dorn kann auch der Druckverformungsrest bei anfänglich konstanter Verformung (DVR, engl. compression set) nach DIN 53 517 bzw. DIN ISO 815 oder ASTM D 395 zur Materialauswahl, insbesondere der radial innen liegenden TPE-V-Schicht 2, herangezogen bzw. eingestellt werden.

Der Druckverformungsrest bildet den plastischen Verformungsanteil eines Testmaterials quantitativ ab. Viele Testverfahren für Elastomere, wie z. B. die Zugfestigkeit, charakterisieren insbesondere die Kurzzeit-Beschaffenheit des Materials. Der DVR hingegen ist ein wichtiger Faktor, der vor Einsatz eines Materials für einen bestimmten längerfristigen Einsatzzweck, wie für eine Leitungsanordnung LA mit einem Bauteil BT und mit einer erfindungsgemäßen flexiblen Fluidleitung 1, wobei diese mit dem Bauteil BT insbesondere über einen Dorn D fluidtechnisch verbunden ist, herangezogen werden sollte, wo also ein viskoelastisches bzw. elastoviskoses Fließen von Bedeutung ist.

Der Druckverformungsrest der TPE-V-Materialien an sich kann im Bereich von 30 % bis 80 %, insbesondere im Bereich von 40 % bis 60 %, liegen. Insbesondere die höheren Werte in diesen Bereichen werden dabei in der erfindungsgemäßen flexiblen Leitung 1 durch den Verbund mit der Verstärkungsschicht 4, die zwischen der an sie radial innenseitig angrenzenden ersten Haftvermittlerschicht 5 und der an sie radial außenseitig angrenzenden zweiten Haftvermittlerschicht 6 eingebettet ist, vorteilhafterweise effektiv nicht wirksam. Da der Druckverformungsrest so definiert ist, dass bei einem kleinen prozentualen Wert die langfristige Formstabilität höher ist, sind generell eher geringe Werte zu bevorzugen.

Durch eine geeignete Einstellung des Verhältnisses von Thermomeranteil zu Elastomeranteil in den TPE-V-Schichten können insbesondere Härte, Elastizitätsmodul und Druckverformungsrest sowie daraus resultierend die für die jeweilige Anwendung maßgeblichen Eigenschaften in weiten Grenzen in gewünschter Weise festgelegt werden.

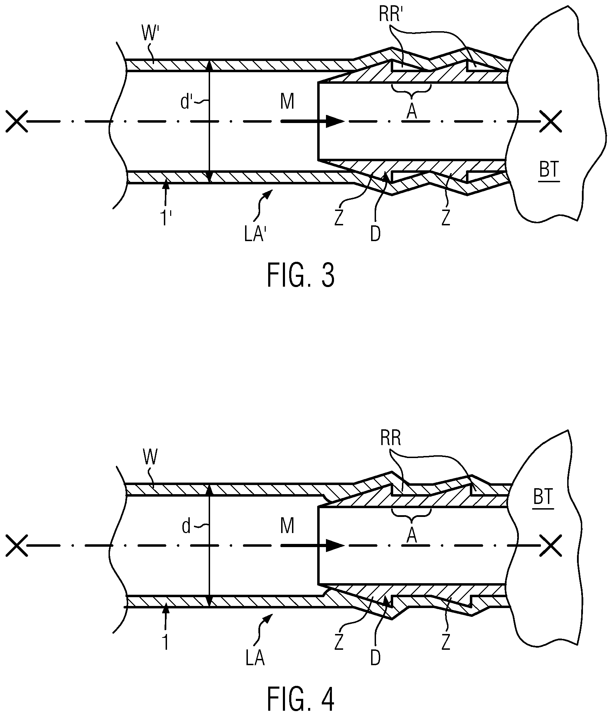

In diesem Zusammenhang sei auf die Figuren 3 und 4 verwiesen, die im Vergleich einen Längsschnitt durch eine bekannte Leitungsanordnung LA` mit einem Bauteil BT und mit einer bekannten Fluidleitung 1', wobei die bekannte Fluidleitung 1' mit dem Bauteil BT über einen Dorn D fluidtechnisch verbunden ist (Fig. 3) und einen Längsschnitt durch eine erfindungsgemäße Leitungsanordnung LA mit einem Bauteil BT, insbesondere mit einem Fahrzeugbauteil, und mit einer erfindungsgemäßen flexiblen Fluidleitung 1, wobei die erfindungsgemäße flexible Fluidleitung 1 mit dem Bauteil BT über einen Dorn D fluidtechnisch verbunden ist (Fig. 4), zeigen.

Bei der bekannten Leitungsanordnung LA` kann die Fluidleitung 1' insbesondere aus einem Thermomer, wie beispielsweise aus PA12, bestehen.

Fig. 3 und 4 zeigen die bekannte Form von in der Fluidtechnik eingesetzten Dornen D, wonach die Dorne D Zähne Z aufweisen, die im Längsschnitt eine Dreiecksform haben, wobei das Dreieck eine in Montagerichtung M der jeweiligen Leitung 1'/1 unter einem vergleichsweise kleinen Winkel, insbesondere z. B. von etwa 30 °, ansteigende Hypotenuse und dann eine in Richtung auf die Montageachse X-X steil, insbesondere unter einem Winkel von etwa 90 °, abfallende Kathete aufweist. Die Zähne können in Achsrichtung X-X mit Abstand A zueinander angeordnet sein. Durch die Dreiecksform und ggf. die Abstände A sind hinter jedem Zahn Z Freiräume gebildet, die durch den Abstand zwischen aufeinanderfolgenden Zahnspitzen definiert sind. Zur Montage werden die Leitungen 1'/1 unter wellenartiger Aufweitung und Wieder-Zurückstellung über die Zähne Z der Dorne D geführt.

Der Unterschied zwischen der bekannten Leitungsanordnung LA' (Fig. 3) und der erfindungsgemäßen Leitungsanordnung LA (Fig. 4) besteht darin, dass die erfindungsgemäße flexible Fluidleitung 1, aufgrund ihres Kriechverhaltens, insbesondere der inneren TPE-V-Schicht 2, unter erhöhtem Druck und/oder erhöhter Temperatur vorteilhafterweise die Freiräume hinter den Zähnen Z des Dorne D nahezu vollständig ausfüllen kann, so dass nur ein minimaler Restraum RR mit weniger als 5 %, vorzugsweise weniger als 3 %, des Gesamtvolumens des Freiraums verbleibt, der in jedem Fall kleiner als der vergleichbare Restraum RR` der bekannten Fluidleitung 1' ist.

Neben der Materialauswahl für die TPE-V-Schichten, die bereits oben erwähnt wurde, spielen darüber hinaus auch die Vernetzungsart und der Vernetzungsgrad eine wichtige Rolle zur Einstellung der Eigenschaften. So können die thermoplastischen Elastomer-Vulkanisate wahlweise mittels eines Schwefelvulkanisators, eines Vulkanisators aus einem organischem Peroxid, eines Vulkanisators aus einem thermoplastischen Phenolharz und/oder mittels Zinkoxid, Magnesiumoxid, Lyserge, para-Chinondioxim, para-Dibenoylchinondioxim, Tetrachlor-para-benzochinon, Poly-para-dinitrosobenzol und/oder Methylendianilin vernetzt sein. Insbesondere für EPDM-PP-Vulkanisate sind Vulkanisatoren aus organischen Peroxiden bevorzugt.

Zusätzlich oder alternativ kann vorgesehen sein, dass die thermoplastischen Elastomer-Vulkanisate (TPE-V) unter Zuhilfenahme eines Vernetzungshilfsmittels, wie eines polyfunktionellen Methacrylatmonomers, insbesondere Ethylenglycoldimethacrylat, Diethylenglycoldimethylacrylat, Polyethylenglycoldimethylacrylat, Trimethylolpropantrimethacrylat, und/oder unter Zuhilfenahme von Allylmethacrylat, Triallylzyanurat, und/oder unter Zuhilfenahme von Divinylbenzol vernetzt sind.

Durch die zweite innere Leitungsschicht 7 ist die Möglichkeit einer weiteren Verbesserung bei der Einstellung des Eigenschaftsprofils einer erfindungsgemäßen Leitung 1 gegeben. So kann zum Beispiel die zweite innere Leitungsschicht 7 aus einem härteren Material hergestellt werden als die radial innen liegende Schicht 2, welche den Leitungsinnenraum R der Fluidleitung 1 begrenzt. Die oben erwähnten gegenläufigen Tendenzen von Montierbarkeit und Stabilität der Verbindung können dadurch optimiert werden, wobei mit Vorteil auch eine Reduzierung der Gesamtwandstärke der beiden inneren Schichten 2/7 gegenüber der erforderlichen Wandstärke für die radial innen liegende Schicht 2 erzielt werden kann, wenn diese nur allein vorhanden ist. Auch lässt sich die Leitung 1 zur Montage dann - weil der Aufweitungsbereich in Bezug auf den Innendurchmesser des Rohrs sehr groß ist, d. h. im Bereich von > 0 % bis 50 % liegt - ohne vorherige Aufweitung aufdornen, wodurch günstigerweise ein Montageschritt eingespart werden kann.

Durch die zweite innere Leitungsschicht 7 kann auch eine Erhöhung der Flexibilität der erfindungsgemäßen Leitung 1 erreicht werden, was z. B. für eine freie Verlegung vorteilhaft ist. So sind bei Abstützung der Leitung 1 durch ein nach den vorstehend genannten Kriterien hartes Material in der zweiten inneren Leitungsschicht 7 mit Vorteil sehr enge Biegeradien, d. h. Biegeradien von bis zu 1d (= 1 mal Leitungsdurchmesser d), ohne Knickung der Leitung 1 möglich.

Was die Verstärkungsschicht 4 betrifft, so kann diese, insbesondere die darin enthaltenen Fasern und/oder Fäden, aus einem Kunststoff, insbesondere aus Polyamid, wie PA6.6 oder Aramid, aus Polyester (PES) und/oder aus Polypropylen (PP), bestehen.

PA6.6 besitzt eine vergleichsweise hohe Festigkeit, ist allerdings nicht kompatibel mit allen TPE-V Sorten. Im Gesamtaufbau der erfindungsgemäßen flexiblen Leitung 1 kann damit im Neuzustand eine höhere Festigkeit als bei Verwendung von PES in der Verstärkungsschicht 4 erzielt werden. Auch kommt es, wenn die Verstärkungsschicht 4 durch Umstricken ausgeführt wird, zu einer geringeren Aufweitung als bei einer PES-Faser.

PES in der Verstärkungsschicht 4 bewirkt eine hohe Festigkeit und Formstabilität der erfindungsgemäßen flexiblen Leitung 1 unter erhöhter Temperaturbeanspruchung, allerdings sind die Bereiche, in den sich die Parameter bei Festigkeitsprüfungen, wie bei der Bestimmung des Berstdrucks, bewegen, enger und liegen tendenziell niedriger als bei Verstärkungsschichten aus PA6.6.

Der Vorteil von PP in der Verstärkungsschicht 4 besteht darin, dass eine aus diesem Material bestehende Faserverstärkung einen hohen eigenen Beitrag zur Haftung an den Haftvermittlern liefern kann.

Die Dicke der Verstärkungsschicht 4 wird durch die Querschnittsflächen und die aufgetragenen Mengen von in der Schicht 4 enthaltenen Fasern und/oder Fäden bestimmt. Dadurch kann insbesondere eine Einstellung der Festigkeit der erfindungsgemäßen flexiblen Leitung 1 erfolgen. Insbesondere wird auf diese Weise maßgeblich die Zugfestigkeit in Längsrichtung beeinflusst. Je dicker die Verstärkungsschicht 4 ist, umso höher ist auch die Festigkeit. Wie bereits erwähnt, können dabei mit Vorteil Fasern und/oder Fäden mit einer Feinheit im Bereich von 500 dtex bis 2000 dtex, vorzugsweise mit einer Feinheit im Bereich von 800 dtex bis 1300 dtex, eingesetzt werden.

Dabei können auch geschlichtete Fasern oder daraus hergestellte Fäden, d. h. solche, die z. B. mit einem spezifischen Kleber getränkt wurden, zur Anwendung kommen. Dadurch lässt sich ein verbesserter Haftverbund zwischen den Fasern und den angrenzenden Materialschichten herstellen.

Was die Art der Fasern betrifft, so können zur Erzielung einer hohen Flexibilität Multifilamente und zur Ausbildung einer hohen Formstabilität in der Querschnittsfläche Monofilamente zum Einsatz kommen. Auch der Einsatz von gezwirnten Multifilamenten ist möglich, wobei durch die Windungen ein optimaler Verbund zu den Haftvermittlerschichten 5, 6 einstellbar ist. Bevorzugt sind insbesondere Zwirne mit der Bezeichnung Z40 bis Z120, wobei das Z die Drehrichtung (rechts) und die dahinter stehende Zahl die Anzahl der Verdrehungen pro Längeneinheit bezeichnen. Mit zunehmender Anzahl der Drehungen erhöht sich bis zu einem gewissen Grad (um bis zu etwa 20 %) die Reißfestigkeit eines Zwirns.

Zur Herstellung von textilen Flächengebilden in der Verstärkungsschicht 4 können verschiedene Wege eingeschlagen werden, die alle zu höheren maximalen Zugkräften und Dehnungen führen, als diese eine unverstärkte Leitung - selbst mit einem Haftvermittler zwischen TPE-V-Schichten - haben kann.

Textile Flächengebilde in der Verstärkungsschicht 4 können auf die verschiedenartigste Weise, insbesondere als Gewebe, Gestricke, Gewirke, ggf. auch als Vliese, gebildet werden, insbesondere durch ein Umflechten, ein Spiral- oder Kreuzwickeln, ein Umstricken mit Plain- oder Lockstich, oder auch durch ein insbesondere zusätzliches Legen von Stehfäden in Längsrichtung, die vorzugsweise aus Aramid bestehen können.

Durch ein Umflechten wird mit Vorteil eine sehr begrenzte Verschiebbarkeit der Fasern oder Fäden hinsichtlich ihres Abstandes zueinander erreicht. Die Aufweitung der Leitung 1 unter Betriebsdruck und Temperatur ist dabei nur halb so hoch wie bei durch Umstricken hergestellten textilen Flächengebilden. Insbesondere kann ein Leitungsaufbau hergestellt werden, dessen Festigkeit deutlich höher ist als beim Vorliegen einer Plainstich-Umstrickung. So ist beispielsweise bei Einsatz eines nur halb so dicken Fadens der Berstdruck bei einer Umflechtung genauso groß wie bei einer Plainstich-Umstrickung. Ein weiterer Vorteil besteht darin, dass die Leitung 1 sich bei hohen Drücken und Temperatureinwirkung nicht verdreht, was insbesondere daran liegt, dass die Umflechtung zu gleichen Teilen gegenläufig aufgebracht wird. Auch bewirkt eine Umflechtung höchste Zugfestigkeiten in Längsrichtung. Allerdings ist der Prozess des Umflechtend sehr langsam und liegt bei maximal 5 m/min, was für das Aufbringen von spiral- und kreuzgewickelten Faserverstärkungen nicht zutrifft.

Beim Spiral- und Kreuzwickeln sind stattdessen sehr hohe Prozessgeschwindigkeiten - insbesondere von bis zu 60 m/min - möglich, wobei die vorstehend erläuterten Vorteile und Nutzen des Umflechtens näherungsweise auch auf das Spiral- bzw. Kreuzwickeln übertragen werden können.

Beim Umstricken mit Plainstich sind die damit erzielten Maschengrößen sehr konstant, und es können gezielt enge Bereiche in Kennwerten der erfindungsgemäßen Leitung 1 eingestellt werden.

Das Umstricken mit Lockstich liefert eine sehr tragfähige Faserverstärkung und ist daher für hoch druckbeanspruchte Leitungen 1 geeignet. Insbesondere verleiht es ihnen eine sehr hohe Zugfestigkeit in Längsrichtung. Die Abzugskräfte von einem Dorn sind vergleichsweise hoch und erreichen das Niveau von einem Geflecht.

Längslaufende, insbesondere zusätzliche, Stehfäden aus Aramid erhöhen die Zugfestigkeit in Längsrichtung bei Faserverstärkungen, z. B. bei Plainstich-Umstrickungen, die diese Eigenschaft nicht schon von selbst mit sich bringen. Es können dabei 1 bis 8, über den Umfang der Leitung 1 gleichmäßig verteilte Fäden, mit einer Feinheit im dtex-Bereich von 500 bis 2000, vorzugsweise von 800 dtex bis 1300 dtex, vorgesehen sein.

Der Flächeninhalt einer Maschengröße einer Faser- oder Fadenverstärkung ist individuell einstellbar und kann im Bereich von 1 mm², insbesondere von 2 mm², bis 20 mm², vorzugsweise im Bereich von 5 mm² bis 15 mm², liegen. Durch die Maschengröße lässt sich die Steifigkeit einer erfindungsgemäßen Leitung 1 einstellen, wobei aber zu beachten ist, dass sich die Flexibilität der erfindungsgemäßen Leitung 1 ggf. kontrovers zu den mechanischen Festigkeitsanforderungen verhalten kann. Der/die Haftvermittler der Schichten 5 und 6 können dabei die Maschen durchdringen und vorzugsweise ausfüllen. Durch eine Maschengröße im o. g. Bereich lässt sich dies optimieren und auch das Biegeverhalten der erfindungsgemäßen Leitung 1 hinsichtlich der Verhinderung einer Faltenbildung verbessern. So lässt sich der Berstdruck bei erhöhter Temperatur durch Variation der Maschengröße anforderungsgerecht einstellen, was mit Vorteil zu Einsparungen in der Wandstärke führen kann. Ebenso lassen sich die Aufweitung der erfindungsgemäßen Leitung 1 unter Betriebsdruck und -temperatur sowie die Dehnung in Längsrichtung in gewünschter Weise beeinflussen.

Generell lässt sich für die erfindungsgemäße Leitung 1 feststellen, dass die Dickenverhältnisse der Leitung als Ganzes und der mit dem Stand der Technik übereinstimmenden Schichten ähnlich eingestellt werden können, wie sie beispielsweise für die oben erwähnte vorteilhafte Ausführungsform einer mehrlagigen Fluidleitung gemäß der EP 3 666 516 B1 genannt sind. Vorteilhafterweise können jedoch die jeweiligen Dicken der erfindungsgemäßen Fluidleitung 1 ohne Qualitätseinbuße um mindestens 5 % bis zu 20 %, ja sogar beispielsweise um 15 %, ja sogar beispielsweise um bis zu 30 %, geringer ausgebildet sein.

Exemplarisch sei in diesem Zusammenhang auch darauf hingewiesen, dass eine bekannte flexible Leitung 1' aus EPDM eine Dichte von etwa 1,4 g/cm³ hat, während eine erfindungsgemäße flexible Rohrleitung 1 bei gleicher Wandstärke mit einer mittleren Dichte von unter 1g/cm³ hergestellt werden konnte. Dies entspricht einer Gewichtseinsparung von etwa 40 %. Grundsätzlich würde ein bekannter EPDM-Schlauch mit einem Innendurchmesser von z. B. 20 mm aber eine Gesamtwandstärke von 3,5 mm benötigen, während der entsprechende Wert einer erfindungsgemäßen flexiblen Rohrleitung 1 bei nur 2,5 mm liegt. Das sind etwa 71 %.

Was die das zweite thermoplastische Elastomer-Vulkanisat umfassende radial außen liegende Schicht 3 betrifft, welche die erfindungsgemäße Fluidleitung 1 gegenüber ihrer Umgebung abschließt, so ist auch deren TPE-V Material entsprechend den zu erwartenden Anforderungen individuell wählbar, wobei auch diese Schicht 3 genutzt werden kann, um für die Endanwendung benötigte Eigenschaften der erfindungsgemäßen Fluidleitung 1 flexibel einzustellen.

So erhöht sich mit Vorteil bei Einsatz eines im anmeldungsgemäßen Sinne weichen Materials (Shorehärte 70A bis 90A) in der radial außen liegende Schicht 3 die Flexibilität des Rohrs bei z. B. für eine geplante freie Verlegung oder zum Ausgleich von Bewegungswegen in einem Fahrzeug.

Durch ein im anmeldungsgemäßen Sinn hartes TPE-V (Shorehärte > 90A bis 50D) in der Außenschicht 3 sind vorteilhafterweise erhöhte Haltekräfte auf einem Dorn D, eine Verringerung der Faltenbildung im Biegeprozess, eine Erhöhung der Festigkeit in Radial- und Längsrichtung, eine Reduktion der bleibenden Aufweitung nach Druck- und Temperatureinwirkung sowie eine Minimierung der Ausbildung einer ovalen Form des Querschnitts beim Biegeprozess erzielbar.

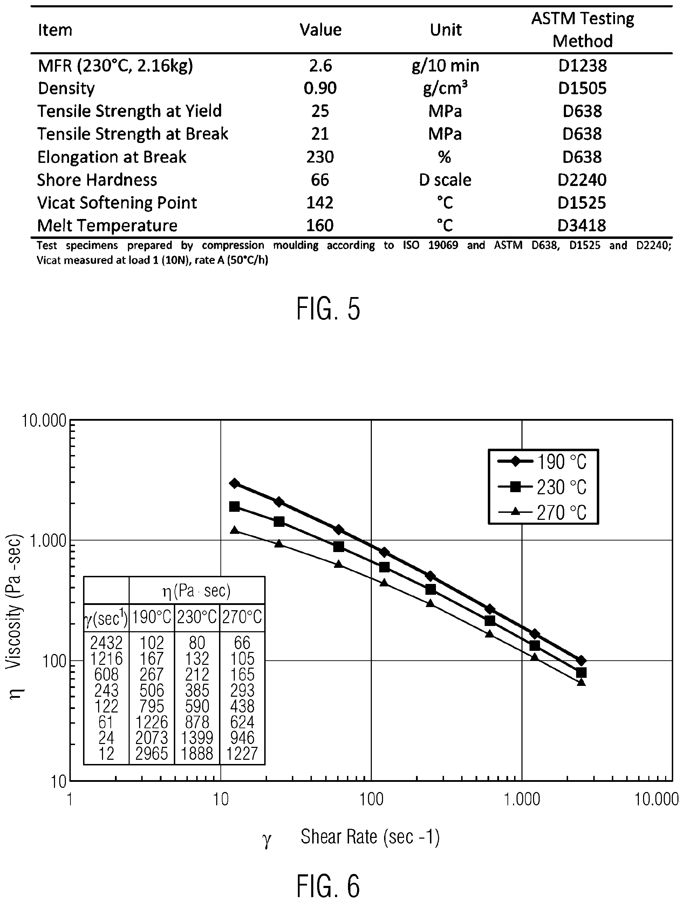

Wie bereits erwähnt, vermitteln die Fig. 5 und die Fig. 6 in tabellarischer und in diagrammatischer Form eine Übersicht über charakteristische allgemeine Eigenschaften von im Rahmen der Erfindung bevorzugt einsetzbaren Haftvermittlern.

Insbesondere handelt es sich dabei um einen Haftvermittler, der ein mit Maleinsäureanhydrid gepfropftes, auf Homo-PP basierendes Material umfasst und unter dem Namen Admer^{™} QB510E von der Firma Mitsui Chemicals Europe GmbH im Handel vertrieben wird. Dieses Material ist aufgrund seiner Thermoplastizität vorteilhafterweise rezyklierbar. Die in Fig. 5 und Fig. 6 enthaltenen Daten sind dabei einem Datenblatt vom September 2022 der genannten Firma für die Spezifikation "PP-Grade, MFR: 2,6, Density 0,90" entnommen.

Die in der Tabelle von Fig. 5 angegebenen Normen, beziehen sich jeweils auf die Fassungen, welche zum Veröffentlichungszeitpunkt des Datenblattes in Kraft waren. Ansonsten beziehen sich in der Anmeldung genannten Normen auf die jeweils zum Anmeldezeitpunkt geltenden Fassungen.

Für im Rahmen der Erfindung bevorzugt einsetzbare Haftvermittler können die in Tabelle 5 exemplarisch angegebenen charakteristischen Eigenschaften um jeweils ± 10 Prozent abweichen.

Es war bereits erwähnt worden, dass ein Vorteil der Erfindung - was die Herstellung einer erfindungsgemäßen flexiblen Leitung 1 betrifft - darin besteht, dass vor der Ummantelung der als Vorrohr dienenden Schichten, also der radial innen liegenden Schicht 2, ggf. der weiteren Innenschicht 7 und der ersten Haftvermittlerschicht 5, kein Vorheizen mehr zwingend notwendig ist, da bei der Ummantelung hohe Verarbeitungstemperaturen angewendet werden können. Dies wird in Fig. 6 insbesondere durch die Kurvenzüge 190 °C, 230 °C und 270 °C veranschaulicht, wobei aus der Grafik auch hervorgeht, dass bei Schergeschwindigkeiten von über 100 pro Sekunde dynamische Viskositäten von weniger als 1000 Pascalsekunden vorliegen, was auch insbesondere für eine gute Extrudierbarkeit wichtig ist. Beim Ummanteln mit der zweiten Haftvermittlerschicht 6 kann der Haftvermittler mit hohen Temperaturen auf das Vorrohr extrudiert werden und somit unter Zwischenlage, insbesondere unter Penetration der Verstärkungsschicht 4, einen sehr hohen Haftverbund ausbilden.

In bevorzugter Ausführung liegt bei der Herstellung die Verstärkungsschicht 4 weitestgehend auf der ersten Haftvermittlerschicht 5 auf und wird dann in die zweite Haftvermittlerschicht 6 eingebettet. Das kann aber auch andersherum erfolgen, d. h. die Verstärkungsschicht 4 wird in die erste Haftvermittlerschicht 5 eingebettet und dann durch die zweite Haftvermittlerschicht 6 überdeckt.

Schließlich ist die Erfindung nicht auf die in den unabhängigen Ansprüchen 1 und 16 definierten Merkmalskombinationen beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal der unabhängigen Ansprüche weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

### Bezugszeichenliste

- 1: Fluidleitung, erfindungsgemäß
- 1': Fluidleitung, bekannt
- 2: radial innen liegende Schicht von 1
- 3: radial außen liegende Schicht von 1
- 4: Verstärkungsschicht von 1
- 5: erste Haftvermittlerschicht von 1
- 6: zweite Haftvermittlerschicht von 1
- 7: weitere Innenschicht von 1

- A: axialer Abstand von Z
- BT: Bauteil
- D: Dorn
- d: Leitungsdurchmesser von 1
- d': Leitungsdurchmesser von 1'
- LA: Leitungsanordnung, erfindungsgemäß
- LA`: Leitungsanordnung, bekannt
- M: Montagerichtung von 1/1' auf D
- R: Leitungsinnenraum von 1
- RR: Restraum zwischen Z in LA
- RR': Restraum zwischen Z in LA'
- W: mehrschichtige Wandung von 1
- W': Wandung von 1'
- X-X: Längsachse von 1 /1'
- Z: Zahn von D

## Patentansprüche

1. Flexible Fluidleitung (1) mit mehrschichtiger Wandung (W), insbesondere zur Verwendung in der Automobilindustrie, wobei die Wandung (W) aufweist:
- eine radial innen liegende Schicht (2), welche einen Leitungsinnenraum (R) der Fluidleitung (1) zum Leiten des Fluids begrenzt, umfassend ein erstes thermoplastisches Elastomer-Vulkanisat,
- eine radial außen liegende Schicht (3), welche die Fluidleitung (1) gegenüber ihrer Umgebung abschließt, umfassend ein zweites thermoplastisches Elastomer-Vulkanisat,
- sowie eine Verstärkungsschicht (4), die zwischen der radial innen liegenden Schicht (2) und der radial außen liegenden Schicht (3) angeordnet ist,
**dadurch gekennzeichnet, dass**
die Verstärkungsschicht (4) zwischen einer an sie radial innenseitig angrenzenden ersten Haftvermittlerschicht (5) und einer an sie radial außenseitig angrenzenden zweiten Haftvermittlerschicht (6) eingebettet ist.

2. Flexible Fluidleitung (1) nach Anspruch 1,
**dadurch gekennzeichnet, dass** zwischen der radial innen liegenden Schicht (2), welche den Leitungsinnenraum (R) der Fluidleitung (1) begrenzt, und der ersten Haftvermittlerschicht (5), welche innenseitig an die Verstärkungsschicht (4) angrenzt, eine weitere Innenschicht (7) angeordnet ist, welche insbesondere ein drittes thermoplastisches Elastomer-Vulkanisat umfasst und welche bevorzugt eine höhere Shorehärte, insbesondere im Bereich von > 90A bis 50D, aufweist als die radial zuinnerst liegende Schicht (2) mit einer bevorzugten Shorehärte im Bereich von 60A bis 90A.

3. Flexible Fluidleitung (1) nach Anspruch 1 oder 2,
**dadurch gekennzeichnet, dass** die Materialien der thermoplastischen Elastomer-Vulkanisate vernetzte Blends aus einem Thermomer, wie Polyamid (PA) oder Polyolefin, insbesondere Polypropylen (PP) oder Polyethylen (PE), und einem Elastomer, wie Ethylen-Propylen-Dien-Kautschuk (EPDM), Isobuten-Isopren-Kautschuk (HR), Acrylnitrilbutadien-Kautschuk (NBR), hydriertem Acrylnitrilbutadien-Kautschuk (HNBR) und/oder Ethylen-Vinylacetat-Kautschuk (EVM), sind.

4. Flexible Fluidleitung (1) nach einem der Ansprüche 1 bis 3,
**dadurch gekennzeichnet, dass** die thermoplastischen Elastomer-Vulkanisate mittels eines Schwefelvulkanisators, eines Vulkanisators aus organischem Peroxid, eines Vulkanisators aus einem thermoplastischen Phenolharz und/oder mittels Zinkoxid, Magnesiumoxid, Lyserge, para-Chinondioxim, para-Dibenoylchinondioxim, Tetrachlor-para-benzochinon, Poly-para-dinitrosobenzol und/oder Methylendianilin vernetzt sind.

5. Flexible Fluidleitung (1) nach einem der Ansprüche 1 bis 4,
**dadurch gekennzeichnet, dass** die thermoplastischen Elastomer-Vulkanisate unter Zuhilfenahme eines Vernetzungshilfsmittels, wie eines polyfunktionellen Methacrylatmonomers, insbesondere Ethylenglycoldimethacrylat, Diethylenglycoldimethylacrylat, Polyethylenglycoldimethylacrylat, Trimethylolpropantrimethacrylat, und/oder unter Zuhilfenahme von Allylmethacrylat, Triallylzyanurat, und/oder unter Zuhilfenahme von Divinylbenzol vernetzt sind.

6. Flexible Fluidleitung (1) nach einem der Ansprüche 1 bis 5,
**dadurch gekennzeichnet, dass** der Druckverformungsrest des ersten, zweiten und/oder dritten thermoplastischen Elastomers im Bereich von 30 % bis 80 %, vorzugsweise im Bereich von 40 % bis 60 %, liegt.

7. Flexible Fluidleitung (1) nach einem der Ansprüche 1 bis 6,
**dadurch gekennzeichnet, dass** zumindest eine der ein thermoplastisches Elastomer-Vulkanisat umfassenden Schichten (2, 3, 7) und/oder der Haftvermittlerschichten (5, 6), vorzugsweise mehrere Schichten, vorzugsweise durch Extrusion oder Coextrusion und/oder mittels Blasformen, Spritzgießen, Thermoformen, Formpressen, 3D-Drucken hergestellt ist/sind.

8. Flexible Fluidleitung (1) nach einem der Ansprüche 1 bis 7,
**dadurch gekennzeichnet, dass** die radial innenseitig an die Verstärkungsschicht (4) angrenzende erste Haftvermittlerschicht (5) und/oder die radial außenseitig an die Verstärkungsschicht (4) angrenzende zweite Haftvermittlerschicht (6) jeweils eine Dicke im Bereich von 0,05 mm bis 1,5 mm, vorzugsweise im Bereich von 0,1 mm und 0,3 mm, aufweist/aufweisen und bevorzugt in die Verstärkungsschicht (4) eingreift/eingreifen.

9. Flexible Fluidleitung (1) nach einem der Ansprüche 1 bis 8,
**dadurch gekennzeichnet, dass** die Verstärkungsschicht (4) aus Fasern, und/oder Fäden, insbesondere mit einer Feinheit im Bereich von 500 bis 2000 dtex, vorzugsweise mit einer Feinheit im Bereich von 800 dtex bis 1300 dtex, gebildet ist, wobei die Fasern oder Fäden vorzugsweise als Gewebe, Gestricke, Vliese, Gewirke, insbesondere durch ein Umflechten, ein Spiral- oder Kreuzwickeln, ein Umstricken mit Plain- oder Lockstich, oder auch durch in Längsrichtung gelegte Stehfäden, insbesondere aus Aramid, zu einem textilen Flächengebilde verarbeitet sind.

10. Flexible Fluidleitung (1) nach einem der Ansprüche 1 bis 8,
**dadurch gekennzeichnet, dass** die Verstärkungsschicht (4), insbesondere die darin enthaltenen Fasern und/oder Fäden, aus einem Kunststoff, insbesondere aus Polyamid, wie PA6.6 oder Aramid, aus Polyester (PES) und/oder aus Polypropylen (PP), bestehen.

11. Flexible Fluidleitung (1) nach einem der Ansprüche 1 bis 10,
**dadurch gekennzeichnet, dass** (die) in der Verstärkungsschicht (4) enthaltene(n) Fasern Multifilamente, ggf. gezwirnte Multifilamente, und/oder Monofilamente sind, wobei diese Fasern oder aus ihnen hergestellten Fäden optional geschlichtet, d. h. mit einem Kleber getränkt, sein können.

12. Flexible Fluidleitung (1) nach einem der Ansprüche 1 bis 11,
**dadurch gekennzeichnet, dass** der Flächeninhalt einer Maschengröße einer Faser- oder Fadenverstärkung im Bereich von 1 mm², vorzugsweise von 2 mm², bis 20 mm², insbesondere im Bereich von 5 mm² bis 15 mm², liegt.

13. Flexible Fluidleitung (1) nach einem der Ansprüche 1 bis 12,
**dadurch gekennzeichnet, dass** das Material in den Haftvermittlerschichten (5, 6) mindestens ein Copolymer umfasst, das Monomereinheiten enthält, die auch im Material der Verstärkungsschicht (4) enthalten oder ihnen chemisch ähnlich sind, wobei das Copolymer des Weiteren auch Monomereinheiten enthält, die in der jeweils angrenzenden ein thermoplastisches Elastomer-Vulkanisat umfassenden Schicht (2, 3, 7) enthalten oder ihnen ähnlich sind, wobei die Haftvermittlerschichten beispielsweise einen mit Maleinsäureanhydrid gepfropften, auf Homo-PP basierenden Haftvermittler umfassen.

14. Flexible Fluidleitung (1) nach einem der Ansprüche 1 bis 13,
**dadurch gekennzeichnet, dass** die Haftvermittlerschichten (5, 6) aus einem Material gebildet sind, welches im Bereich von 190 °C bis 270 °C bei Schergeschwindigkeiten von über 100 pro Sekunde eine dynamische Viskosität von weniger als 1000 Pascalsekunden aufweist.

15. Flexible Fluidleitung (1) nach einem der Ansprüche 1 bis 14,
**dadurch gekennzeichnet, dass** in der Verstärkungsschicht (4) enthaltene Maschen von einem Material der Haftvermittlerschichten (5, 6) durchdrungen und bevorzugt davon ausgefüllt sind.

16. Leitungsanordnung (LA) mit einem Bauteil (BT) und mit einer flexiblen Fluidleitung (1) nach einem der Ansprüche 1 bis 15, wobei die flexible Fluidleitung (1) mit dem Bauteil (BT) fluidtechnisch verbunden ist.

17. Leitungsanordnung (LA) nach Anspruch 16
**dadurch gekennzeichnet, dass** die flexible Fluidleitung (1) mit dem Bauteil (BT) über einen Dorn (D) fluidtechnisch verbunden ist.

18. Leitungsanordnung (LA) nach Anspruch 17
**dadurch gekennzeichnet, dass** die flexible Fluidleitung (1), mit insbesondere ihrer radial inneren, aus dem thermoplastischen Elastomer bestehenden Schicht (2), Freiräume zwischen Zähnen (Z) des Dornes (D) nahezu vollständig ausfüllt, so dass jeweils nur ein Restraum (RR) von weniger als 5 %, vorzugsweise von weniger als 3 %, des Gesamtvolumens des jeweiligen Freiraums verbleibt.

19. Leitungsanordnung (LA) nach einem der Ansprüche 15 bis 18,
**dadurch gekennzeichnet, dass** das Bauteil (BT) ein Fahrzeugbauteil, wie eine Scheibenwaschanlage, eine elektrische Fahrzeugbatterie eines Elektrofahrzeuges, eine Motorkühlvorrichtung zum Kühlen eines Verbrennungsmotors, ein Wärmetauscher zum Kühlen von elektrischen Steuerungen und/oder eine Temperiervorrichtung, beispielsweise für wässrige Harnstofflösungen, ist.
